# EUROPEAN PATENT SPECIFICATION

(11) **EP 2 404 495 B1**
(45) Date of publication and mention of the grant of the patent: **03.04.2019**
(21) Application number: 10745849.9
(22) Date of filing: 23.02.2010
(51) Int. Cl.: A01G 3/06, A01D 34/73, A01D 34/90

(54) **CHAIN BRUSH CUTTING MACHINE**
KETTENBUSCHRÄUMER
DÉBROUSSAILLEUSE À CHAÎNES

(30) Priority: 24.02.2009 ES 200900347 U
(43) Date of publication of application: 11.01.2012
(73) Proprietor: Sanchez Garcá, Vicente, 28290 Las Rozas (Madrid) (ES); Buendía Martínez, José Manuel, 28290 Las Rozas (Madrid) (ES)
(72) Inventor: Sanchez Garcá, Vicente, 28290 Las Rozas (Madrid) (ES); Buendía Martínez, José Manuel, 28290 Las Rozas (Madrid) (ES)
(74) Representative: Ungria López, Javier
(86) International application number: PCT/ES2010/070099
(87) International publication number: WO 2010/097493

(56) References cited:
- EP-A1- 1 769 663
- ES-A1- 2 235 595
- GB-A- 1 211 250
- US-A- 3 112 599
- US-A- 3 540 198
- US-A- 4 631 828
- US-A- 4 631 828
- US-A- 4 936 884
- US-A- 5 103 561
- US-A1- 2004 250 522

## Description

### OBJECT OF THE INVENTION

The present invention, as it is expressed in the statement of this specification, relates to a chain brush cutting machine comprising a characteristic cutting device designed for clearing the vegetation found near roads and especially in the vicinity of railroad and railway tracks, in order to avoid vehicles from interfering with that vegetation, so that said cutting device has the special characteristic of including some characteristic cutting elements performing an effective clearing by crumbling the vegetation into tiny pieces, even though it is formed by shrubs and other plants with similar characteristics.

The small size of the cleared vegetation helps the same to integrate faster into the ground in addition to occupying a reduced volume.

### BACKGROUND OF THE INVENTION

Currently, brush cutter machines generally having an end motor that rotates a rotor arranged in a head opposing to said end motor, transmitting motion through a long shaft protected by a tubular structure and other transmission elements, are known.

Adjacent to the end motor there is a reinforced structure comprising some sort of handlebar with knobs for governing the machine in question.

On the other hand, on the rotor rotating at high speed, some cutting elements for clearing the vegetation are fixed, which cutting elements are determined by blades cutting the vegetation into pieces when applied to the vegetation. These blades need to be sharpened from time to time.

When it comes to clear shrubs and similar harder plants, the cut pieces are relatively longer, so that these are drifted occupying a certain volume thus hindering their disappearance over time.

In other cases, when it comes to clear smaller seasonal plants cutting elements that basically consist of thin elastic elements can be used.

Document US2004/0250522 A1, being this document the closest state of the art of the present invention, discloses a chain brush cutting machine comprising an end motor adjacent to a reinforced structure provided with control knobs and extending from that reinforced structure an elongated tubular body ending in a head with a rotating rotor. It comprises a cutting device which receives the motion from the motor through an internal transmission to which is connected. The cutting device comprises a support with at least one pair of cutting chains fixed at equidistant points from the geometry centre of said support, while said points are separated by an equidistant angular space also with respect to said geometry centre of the support. The short chains are fixed to the support by using screws and nuts with the insertion of some washers including safety means which prevent relative unscrewing between those screws and nuts.

Document US3540198 A discloses a swing knife assembly for a rotary mower, with the assembly including a disc and several cutting blades rotatably mounted on the disc. The disc and blade assembly is mountable in a rotary mower and is driven by a prime mover, such as a gasoline engine. The blades are mounted on the disc to be completely rotatable about mounting pins or bolts which extend through the planar shanks of the blades and through oblong openings in the disc. Thus the blades can rotate 360° about the axis of the respective pins, and the pins have corresponding flat sides, that is they are shaped in their shank portions so that the pins are snugly received in the oblong shaped openings to be non-rotatable on the disc.

### DESCRIPTION OF THE INVENTION

The chain brush cutting machine constituting the object of the invention according to claim 1 characterizes in that it includes a cutting device comprising a support with at least a pair of short chains responsible for performing the cutting and a fine crumbling of the vegetation for clearing thereof.

For this purpose, this support is jointly fixed on a rotating rotor of an end head of the brush cutter machine, which also has a motor at the opposite end adjacent to a reinforced structure with a handlebar having suitable actuating knobs.

The reinforced structure extends in an elongated tubular body ending in the end head and within which a shaft runs for transmitting high speed rotating motion from the rotor, and therefore from the support with chains, which when rotating at high speed due to the centrifugal force, these chains are located in a plane strongly hitting on vegetation thus crumbling it into tiny pieces that shall be deposited levelled with the ground, but not drifted as it happens with conventional cutting devices described in the previous section, which are only capable of cutting the vegetation into relatively large pieces and therefore the same are drifted.

Whereas, with the characteristic cutting device of the invention under consideration a clearing is achieved thus obtaining a fine crumbling contributing to its rapid integration into the ground and therefore disappearing in a relatively short time.

Another advantage of the cutting device of the invention is that it does not need to be sharpened, and also the cost is lower than conventional cutting devices.

Another feature of the invention is that the side holes comprise a configuration different from the circular one which is complemented with an end section of the screws for fixing the chains, end section adjacent to the head thereof, in order to restrain the rotation of such screws for securing and facilitating tightening the nuts coupled into those screws.

Said end section protrudes from one of the faces of the flat support for coupling the respective end link of the chains in a part thereof and preventing a relative rotation between that link and the screw, thus ensuring the positioning of the chains, which will be maintained during the rotation of the cutting device, at all times in diametrically opposite directions.

The sections of the side holes and end sections of the screws will preferably be quadrangular, but these could present many other shapes.

Another feature of the invention is that the free end of the screws is affected by a front recess facilitating later on the riveting which will stop against the respective nut in order to ensure a fully restraint and fixation.

Next, in order to facilitate a better understanding of this specification and forming an integral part thereof some figures in which the object of the invention has been represented in an illustrative but not limitative manner, are attached.

### BRIEF DESCRIPTION OF THE DRAWINGS

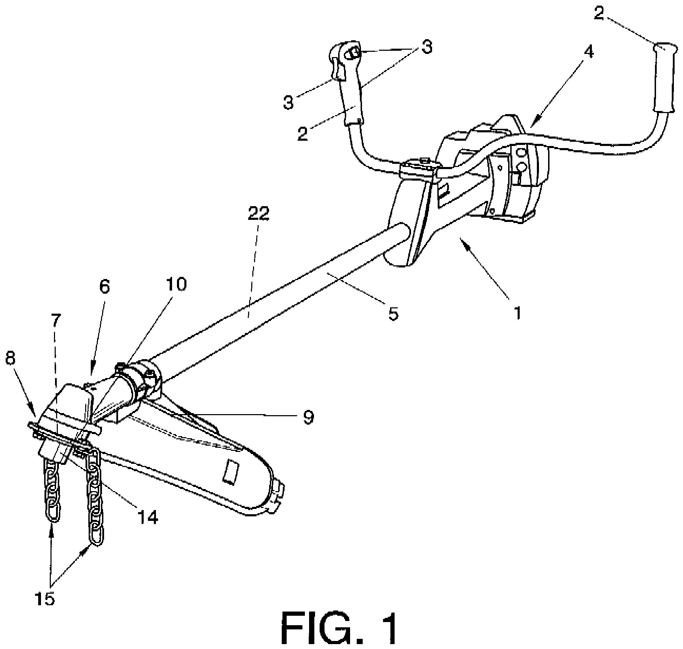

Figure 1. - Shows a perspective view of the chain brush cutting machine, object of the invention.
   It includes a characteristic cutting device fixed to a rotor arranged in an end head of the machine.

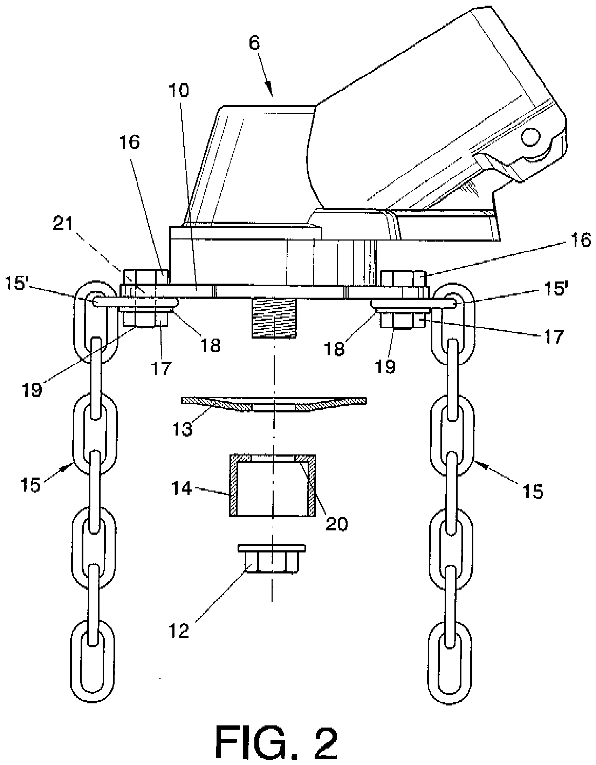

Figure 2. - Shows a detailed view of the end head including the cutting device.

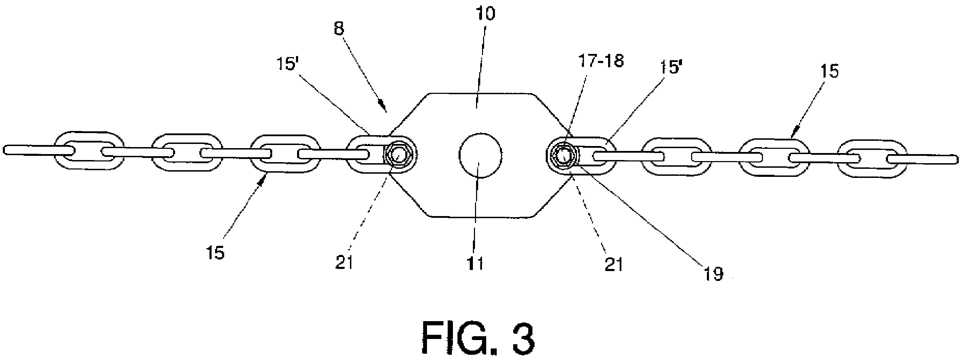

Figure 3. - Shows a plan view of the cutting device itself.

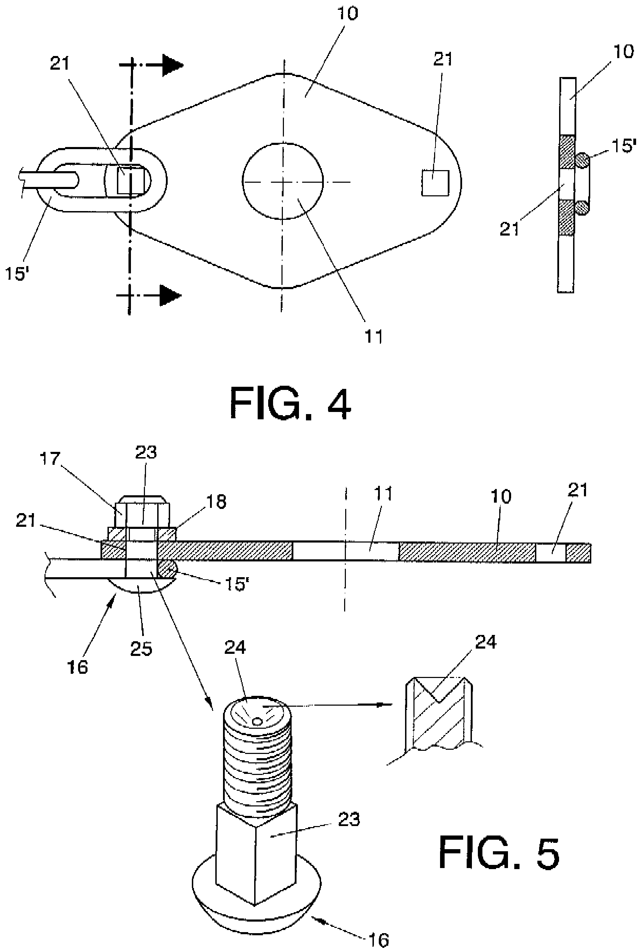

Figure 4. - Represents another plan view similar to the previous one.
Figure 5. - Shows an elevational view of the cutting device.

### DESCRIPTION OF THE PREFERRED EMBODIMENT

The present section includes a detailed definition of the chain brush cutting machine constituting the object of the invention according to claim 1, as well as particular preferred embodiments of the invention according to dependent claims 2 to 7.

Considering the numbering adopted in the figures, the chain brush cutting machine is determined from a reinforced structure 1 including a handlebar 2 with control knobs 3, while at one end of said reinforced structure 1 there is a motor 4, whereas from the opposite end an elongated tubular body 5 ending in a head 6 provided with a high speed rotating rotor 7 wherein a characteristic cutting device 8 for performing the clearing is connected, extends.

The motion from the motor 4 to the rotor 7 is carried out through an internal transmission that includes a shaft 22 running inside the elongated tubular body 5.

In turn, in proximity to the head 6 a protector 9 has been fixed for preventing the user from get physically injured during the use thereof.

On this premise, the cutting device 8 comprises a flat support 10 affected by a central hole 11 through which it is possible to fix the flat support 10 to the rotor 7 by using a safety nut 12 pressing against an elastic washer 13 and the internal annular bottom 20 of an even bushing 14 protecting the safety nut 12 threaded into an end portion of the rotor 7. The smooth surface of the bushing 14 will prevent accidentally snagging the vegetation or other.

In turn, at two points equidistant from the center of the support and arranged in the same direction, a pair of short chains 15 as cutting elements are fixed in said points by using screws 16 and nuts 17 with the insertion of other washers 18. Equidistant fixation of the chains 15 will prevent unwanted vibrations achieving a more balanced and smooth functioning of the machine assembly.

On the other hand, the flat support 10 includes side holes 21 into which the screws 16 for fixing the chains are fitted.

The immobilization of the nuts 17 can be ensured by using a pin not shown in the figures, by a small crushing deformation 19 in the threaded connection between the nut 17 and screw 16, or other means suitable for preventing any possibility that the fixation of the chain 15 may be demounted from the flat support 10; being able to even use welding points, since the detachment or separation of the chains 15 when rotating at high speed dragged by the rotor 7 during machine operation, could cause a serious accident because of such separation.

Finally, it can be noted that the chains 15 could also be directly welded to the flat support 10, or any other fixation system of the chains 15 to the flat support 10 can be used in embodiments not falling within the scope of the present invention.

The side holes 21 comprise a quadrangular configuration complemented with an end section 23 of the screws 16 for fixing the chains 15, which end section is adjacent to the head of such screws 16.

A part of the quadrangular-shaped end section 23 protrudes from one of the faces of the flat support 10 for complementary coupling to that part the respective end link 15' of the chains 15, thus preventing a relative rotation between that end link 15' and the respective screw 16. In turn, there is not a relative rotating movement either between this screw 16 and the flat support 10, thereby attaining total positioning safety and stable fixing of the chains 15, fixing chain screws 16 and flat support 10.

On the other hand, the free end of the screws 16 for fixing the chains 15 are affected with a front recess 24 facilitating the riveting or crushing deformation 19 contacting against the free faces of the nuts 17 coupled to the mentioned screws 16.

The link 15' of the chains 15 through which they are linked to the support 10, which link 15' is fixed between one of the faces of said support 10 and the head 25 of the respective screw 16, while the washer stops against the other even face of the support 10 and the nut 17 stops, in turn, against the aforementioned washer 18.

In another embodiment there is also the possibility that the link 15' of the chains 15 through which they are linked to the support 10, said link 15' is fixed between the respective nut 17 and washer 18.

## Claims

1. **CHAIN BRUSH CUTTING MACHINE**, which comprises an end motor (4) adjacent to a reinforced structure (1) provided with control knobs (3), and extending from that reinforced structure (1) an elongated tubular body (5) ending in a head (6) with a rotating rotor (7) wherein a cutting device (8) receiving the motion from the motor (4) through an internal transmission is connected, the cutting device (8) comprising a support (10) with at least one pair of cutting chains (15) fixed at equidistant points from the geometric center of said support (10), while said points are separated by an equidistant angular space also with respect to said geometric center of the support (10), wherein the cutting chains (15) are fixed to the support (10) by using screws (16) and nuts (17) with the insertion of some washers (18), including safety means which prevent relative unscrewing between those screws (16) and nuts (17) **characterized in that** the equidistant points of the support (10) where the chains (15) are fixed comprise a plurality of side holes (21) passing through in a way other than circular and wherein some end sections (23) of the screws (16) for fixing the chains (15) are complementarily inserted, which end sections (23) have the same shape as such through-holes (21) while being adjacent to the head of the mentioned screws (16), said end sections (23) protruding with respect to the flat support (10) in order to allow coupling and fitting some end links (15') of the chains (15), thus preventing relative rotating movements of said end links (15') with respect to the mentioned screws (16) and of these with respect to the support (10), and wherein the safety means consist of some small crushing deformations (19) in the threaded connection between screws (16) and nuts (17).

2. **CHAIN BRUSH CUTTING MACHINE**, according to claim 1, **characterized in that** the support (10) includes in its geometric center a central hole (11) wherein a threaded end part of the rotor (7) is fitted for fixing, with the aid of a safety nut (12) and with the insertion of at least one elastic washer (13), said support (10) to the rotor (7).

3. **CHAIN BRUSH CUTTING MACHINE**, according to claim 2, **characterized in that** for fixing the support (10) an even bushing (14) with an internal annular bottom (20) pressed by the safety nut (12) is inserted.

4. **CHAIN BRUSH CUTTING MACHINE**, according to claim 1, **characterized in that** the shape of the side holes (21) and end sections (23) of the screws (16) is essentially quadrangular.

5. **CHAIN BRUSH CUTTING MACHINE**, according to claim 1, **characterized in that** the front end of the screws (16) for fixing the chains (15) includes a front recess (24) facilitating the crushing deformation (19) against the nuts (17).

6. **CHAIN BRUSH CUTTING MACHINE**, according to any one of claims 1, 4, and 5, **characterized in that** the link (15') of the chains (15) through which said chains are linked to the support (10), said link (15') is fixed between one of the faces of said support (10) and the head (25) of the respective screw (16), while the washer (18) stops against the other even face of the support (10) and the nut (17) stops, in turn, against the aforementioned washer (18).

7. **CHAIN BRUSH CUTTING MACHINE**, according to any one of claims 1, 4, and 5, **characterized in that** the link (15') of the chains (15) through which said chains are linked to the support (10), said link (15') is fixed between the nut (17) and respective washer (18).

## Patentansprüche

1. Ketten-Freischneider, der einen am Ende befindlichen Motor (4), der an eine verstärkte Struktur (1) angrenzt, die mit Bedienknöpfen (3) versehen ist, sowie einen länglichen röhrenförmigen Körper (5) umfasst, der sich von dieser verstärkten Struktur (1) aus erstreckt und in einem Kopf (6) mit einem sich drehenden Rotor (7) endet, und mit dem eine Schneidvorrichtung (8) verbunden ist, die die Bewegung von dem Motor (4) über eine innere Übertragungseinrichtung empfängt, wobei die Schneideinrichtung (8) einen Halter (10) mit wenigstens einem Paar Schneidketten (15) umfasst, die an gleich weit von dem geometrischen Mittelpunkt des Halters (10) entfernten Punkten befestigt sind, wobei die Punkte auch um einen gleichgroßen Winkel-Zwischenraum von dem geometrischen Mittelpunkt des Halters (10) getrennt sind und die Schneidketten (15) mit Schrauben (16) sowie Muttern (17) und einigen eingefügten Scheiben (18) an dem Halter (10) befestigt sind, die Sicherungseinrichtungen einschließen, die Lösen der Schrauben (16) und der Muttern (17) voneinander verhindern, **dadurch gekennzeichnet, dass** die gleich weit entfernten Punkte des Halters (10), an denen die Ketten befestigt sind, eine Vielzahl seitlicher Löcher (21) umfassen, die anders als kreisförmig durch ihn hindurch verlaufen und in die einige Endabschnitte (23) der Schrauben (16) zum Befestigen der Ketten (15) komplementär eingeführt sind, wobei die Endabschnitte (23) die gleiche Form haben wie diese Durchgangslöcher (21) und dabei an den Kopf der Schrauben (16) angrenzen, und die Endabschnitte (23) in Bezug auf den flachen Halter (10) vorstehen, um Koppeln und Einpassen einiger End-Glieder (15') der Ketten (15) zu ermöglichen und so relative Drehbewegung der End-Glieder (15') in Bezug auf die Schrauben (16) und derselben in Bezug auf den Halter (10) zu verhindern, und die Sicherungseinrichtungen aus einigen kleinen Quetsch- verformungen (19) an der Gewindeverbindung zwischen Schrauben (16) und Muttern (17) bestehen.

2. Ketten-Freischneider nach Anspruch 1, **dadurch gekennzeichnet, dass** der Halter (10) an seinem geometrischen Mittelpunkt ein mittiges Loch (10) enthält, in das ein mit Gewinde versehene Endteil des Rotors (7) eingepasst ist, um den Halter (10) mit Hilfe einer Sicherungsmutter (12) und wenigstens einer eingefügten elastischen Scheibe (13) an dem Rotor (7) zu befestigen.

3. Ketten-Freischneider nach Anspruch 2, **dadurch gekennzeichnet, dass** zum Befestigen des Halters (10) eine gerade Buchse (14) mit einem ringförmigen Innenboden (20) eingefügt ist, auf den die Sicherungsmutter (12) drückt.

4. Ketten-Freischneider nach Anspruch 1, **dadurch gekennzeichnet, dass** die Form der seitlichen Löcher (21) und der Endabschnitte (23) der Schrauben (16) im Wesentlichen viereckig ist.

5. Ketten-Freischneider nach Anspruch 1, **dadurch gekennzeichnet, dass** das vordere Ende der Schrauben (16) zum Befestigen der Ketten (15) eine vordere Vertiefung (24) enthält, die die Quetschverformung (19) an den Muttern (17) ermöglicht.

6. Ketten-Freischneider nach einem der Ansprüche 1, 4 und 5, **dadurch gekennzeichnet, dass** das Glied (15') der Ketten (15), über das die Ketten mit dem Halter (10) verbunden sind, zwischen einer der Flächen des Halters (10) und dem Kopf (25) der entsprechenden Schraube (16) fixiert ist und dabei die Scheibe (18) an der anderen geraden Fläche des Halters (10) anliegt und die Mutter (17) ihrerseits an der Scheibe (18) anliegt.

7. Ketten-Freischneider nach einem der Ansprüche 1, 4 und 5, **dadurch gekennzeichnet, dass** das Glied (15') der Ketten (15), über das die Ketten mit dem Halter (10) verbunden sind, zwischen der Mutter (17) und der entsprechenden Scheibe (18) fixiert ist.

## Revendications

1. Débroussailleuse à chaînes qui comprend un moteur d'extrémité (4) adjacent à une structure renforcée (1) prévue avec des boutons de commande (3) et s'étendant à partir de cette structure renforcée (1), un corps tubulaire allongé (5) se terminant par une tête (6) avec un rotor rotatif (7), dans laquelle est raccordé un dispositif de coupe (8) recevant le mouvement du moteur (4) par le biais d'une transmission interne, le dispositif de coupe (8) comprenant :
un support (10) avec au moins une paire de chaînes de coupe (15) fixées à des points équidistants du centre géométrique dudit support (10), alors que lesdits points sont séparés par un espace angulaire équidistant également par rapport audit centre géométrique du support (10), dans laquelle les chaînes de coupe (15) sont fixées au support (10) à l'aide de vis (16) et d'écrous (17) pour l'insertion de certaines rondelles (18), comprenant des moyens de sécurité qui empêchent le dévissage relatif entre ces vis (16) et ces écrous (17), **caractérisée en ce que** les points équidistants du support (10) où les chaînes (15) sont fixées, comprennent une pluralité de trous latéraux (21) traversant d'une autre façon qu'une manière circulaire et dans laquelle certaines sections d'extrémité (23) des vis (16) pour fixer les chaînes (15) sont insérées de manière complémentaire, lesquelles sections d'extrémité (23) ont la même forme que ces trous débouchants (21) tout en étant adjacentes à la tête des vis (16) mentionnées, lesdites sections d'extrémité (23) faisant saillie par rapport au support plat (10) afin de permettre le couplage et le montage de certains maillons d'extrémité (15') des chaînes (15), empêchant ainsi des mouvements rotatifs relatifs desdits maillons d'extrémité (15') par rapport aux vis (16) mentionnées et de ces dernières par rapport au support (10), et dans laquelle les moyens de sécurité se composent de certaines petites déformations d'écrasement (19) dans le raccordement fileté entre les vis (16) et les écrous (17).

2. Débroussailleuse à chaînes selon la revendication 1, **caractérisée en ce que** le support (10) comprend, dans son centre géométrique, un trou central (11), dans lequel une partie d'extrémité filetée du rotor (7) est montée pour la fixation, à l'aide d'un écrou de sécurité (12) et avec l'insertion d'au moins une rondelle élastique (13), dudit support (10) sur le rotor (7).

3. Débroussailleuse à chaînes selon la revendication 2, **caractérisée en ce que** pour fixer le support (10), on insère une douille régulière (14) avec un fond annulaire interne (20) comprimé par l'écrou de sécurité (12).

4. Débroussailleuse à chaînes selon la revendication 1, **caractérisée en ce que** la forme des trous latéraux (21) et des sections d'extrémité (23) des vis (16) est essentiellement quadrangulaire.

5. Débroussailleuse à chaînes selon la revendication 1, **caractérisée en ce que** l'extrémité avant des vis (16) pour fixer les chaînes (15) comprend un évidement avant (24) facilitant la déformation d'écrasement (19) contre les écrous (17).

6. Débroussailleuse à chaînes selon l'une quelconque des revendications 1, 4 et 5, **caractérisée en ce que** le maillon (15') des chaînes (15) par le biais duquel lesdites chaînes sont reliées au support (10), ledit maillon (15') est fixé entre l'une des faces dudit support (10) et la tête (25) de la vis (16) respective, alors que la rondelle (18) s'arrête contre l'autre face régulière du support (10) et l'écrou (17) s'arrête, à son tour, contre la rondelle (18) mentionnée précédemment.

7. Débroussailleuse à chaînes selon l'une quelconque des revendications 1, 4 et 5, **caractérisée en ce que** le maillon (15') des chaînes (15) par le biais duquel lesdites chaînes sont reliées au support (10), ledit maillon (15') est fixé entre l'écrou (17) et la rondelle (18) respective.
